## Europäisches Patentamt
## European Patent Office
## Office européen des brevets

(11) Publication number: **0 100 054**
**B1**

## EUROPEAN PATENT SPECIFICATION

(45) Date of publication of patent specification: **12.10.88**

(51) Int. Cl.⁴: **G 11 B 5/64, G 11 B 5/84, H 01 F 10/26, H 01 F 41/14**

(21) Application number: **83107043.8**

(22) Date of filing: **18.07.83**

(54) Magnetic recording medium.

(30) Priority: **22.07.82 JP 128784/82**

(43) Date of publication of application:
**08.02.84 Bulletin 84/06**

(45) Publication of the grant of the patent:
**12.10.88 Bulletin 88/41**

(84) Designated Contracting States:
**DE FR GB**

(56) References cited:
**EP-A-0 046 269**
**EP-A-0 077 549**
**US-A-4 233 352**

(73) Proprietor: **Matsushita Electric Industrial Co., Ltd.**
**1006, Oaza Kadoma**
**Kadoma-shi Osaka-fu, 571 (JP)**

(72) Inventor: **Suzuki, Takashi**
**45-5, Ankoji-cho 5-chome**
**Takatsuki City 569 (JP)**
Inventor: **Shinohara, Koichi**
**6-8-305, Okamoto 4-chome**
**Higashinada-ku Kobe City, 658 (JP)**
Inventor: **Odagiri, Masaru**
**2-46, Seiwadai-nishi 2-chome**
**Kawanishi City 666-01 (JP)**
Inventor: **Fujita, Takashi**
**12-404, 3-2, Seiwadai-higashi 4-chome**
**Kawanishi City 666-01 (JP)**
Inventor: **Kawase, Shigeki**
**6-15, Chigusa 3-chome**
**Takarazuka City 665 (JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**D-8000 München 40 (DE)**

Courier Press, Leamington Spa, England.

## Description

Background of the invention

The present invention relates to an improvement in magnetic recording medium, specially suitable for metal thin film type magnetic recording medium for video tape recording. Ferromagnetic thin film type magnetic recording medium manufactured by forming on a polyester film such ferromagnetic thin film as of Fe, Co; Ni or their alloys, by means of vacuum deposition, ion plating, spattering, electrolytic plating, etc. is advantageous in that its recording density can be drastically increased in comparison with the conventional coating magnetic film type recording medium. Such magnetic recording medium must have good surface characteristic suitable for the recording. Since the ferromagnetic thin film is of such a small thickness in the range of from 0.01 to 0.3 μm the surface characteristic of it reflects those of the substrate plastic film. On the other hand it has been found that a magnetic recording medium to be used in high density recording should have a substrate surface having a small roughness (peak to valley-bottom level difference) of protrusions and high density distribution of minute unevenness is considered good. As a substrate suitable for the above-mentioned conditions, the plastic substrates have been made by forming extremely minute protrusions induced by residue of catalyst for polyester polymerization on the surfaces, or by forming wave-shaped or granular pattern on the surface of the polyester film by forming cross linked high molecular thin film mainly consisting of denatured silicone resin, epoxy resin or urethane on the surface of the polyester film during stretching process. Magnetic recording medium made by forming ferromagnetic thin film on the above-mentioned films have advantage that it has a satisfactory still life by friction with video recorder magnetic heads, but the conventional magnetic recording medium with ferromagnetic thin film have such short-coming that when they are used under 30°C and 80%—90% relative humidity (hereinafter referred to as RH), i.e., high moisture, it is liable to make squealing at running around a head cylinder part.

The present invention is for providing magnetic recording medium having good surface characteristic that is not liable to produce the squealing.

Ordinary polyester film available in the market comprises low polymerized composition which is by-produced during polymerization of the polyester resin, i.e., oligomer at a rate of about 1%. In general, a polyester film has smaller distribution of the oligomer component at surface parts because in a heat-set treatment at a final process of making the film, the oligomers on the surface parts are supposed to have sublimated from the surfaces, thereby making the surfaces very smooth after the heat set treatment. When such polyester film with very smoothly finished surface is exposed to a high temperature, oligomers inside the film diffuse on the surface parts and make minute crystal type depositions on the polyester film surfaces. That is, ordinary polyester film available in the market hardly has oligomer protrusions of noticeable sizes. Afterwards such a polyester film is subjected to heat or radiated energies from metal vapor or ion vapor or vaporizing source during the processing of forming ferromagnetic thin film by vacuum deposition, ion plating, spattering, etc. for forming ferromagnetic thin film on the polyester film. And therefore oligomer protrusions are formed on the surface of the polyester film during such formation process of ferromagnetic thin film. As a result, polyester film coated with a ferromagnetic thin film becomes to have oligomer protrusions under the ferromagnetic film. However, when ordinary polyester film available in the market is used as the substrate, the density of the oligomer protrusions on the substrate surface is only about 100/mm² or smaller.

In order to improve the performance of a magnetic recording medium it is already known to form on the smooth surface of a plastic film, like a polyester film, worm-like nodules or protrusions consisting of a cured high molecular polymer.

According to the teachings of EP—A—046296, these polymers are used in the form of aqueous emulsions and the emulsions are applied or coated over a monoaxially elongated polyester film which is as free as possible from residual catalyst. The coated film is heat set at a temperature of between 180 to 200°C and afterwards the magnetic thin film is deposited on the rough surface created by the worm-like nodules. According to one example of this prior art finely divided graphite particles are incorporated into the coating emulsion and dispersed thereby in the nodules formed by the cured polymers.

US—PS 4,233,352 specifically teaches to use as nodule forming material a mixture of water-soluble polymers, like methyl cellulose, and of water-emulsifiable polymers, like a polysiloxane and/or a styrene-butadiene-rubber. Film setting is carried out at a temperature of 200°C.

Applicant's own unpublished older right, EP—A—0077549 envisages to apply rumple- or worm-like nodules on smooth surfaces of polyester films, into which nodules there are dispersed finely divided particles having a diameter of between 0.01 to 0.2 μm. According to one example minute crystals of oligomers are formed as precipitation during a heat treatment step of between 180 and 200°C, but only the height of such protrusions is documented as being between 0.01 and 0.05 μm.

Summary of the invention

The inventors found that magnetic recording media with ferromagnetic thin film formed on a polyester film, which has oligomer protrusions on the surface of the polyester film and under the ferromagnetic thin film distributing with a certain large number per area, have satisfactory characteristic of substantially no liability of squealing, even at such a severe condition of 30°C and 80%—90% RH.

The purpose of the present invention is to provide a magnetic recording medium having satisfactory characteristic of substantially no squealing even at severe operating conditions.

According to the present invention, a magnetic recording medium which has satisfactory characteristic of substantially no squealing, and long still life is obtainable.

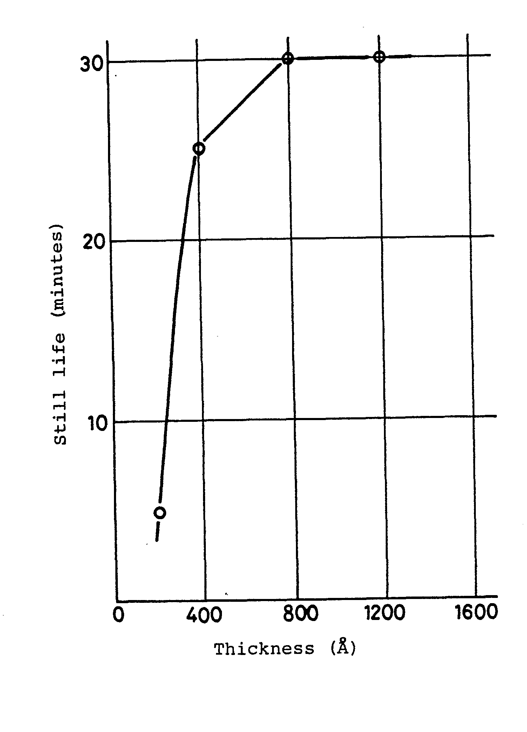

Brief description of the drawing

Attached drawing is a graph showing the relation between thickness of ferromagnetic thin film and still life of a magnetic recording medium of an example made in accordance with the present invention.

Description of the preferred embodiments

The magnetic recording medium according to the invention comprises:

a polyester substrate having oligomer protrusions at least on its principal face at a density of $1000/mm^2$ or higher, said protrusions having heights of between 0.01 and 0.2 µm and, diameters of between 0.08 and 1.2 µm, the lateral spread of said protrusions being less than 1 µm, and a ferromagnetic thin film having a thickness of 0.04 µm or larger on said principal face.

As polyester film to be used as starting substance for the substrate film for this invention, the following films are appropriate: A film having as major component polyethyleneterephthalate as single substance, crystalline copolymer and mixed polymer mainly consisting of polyethyleneterephthalate, polyethylene-2,6-naphthalate as single substance, crystalline copolymer and mixed polymer mainly consisting of polyethylene-2,6-naphthalate, or the like, and they are made through stretch film-forming process, wherein:

(1) Size of solid state fine grain induced by residue of polymerization catalyst is so controlled that only extremely fine grains (e.g. 0.05 to 0.1 µm grains) are retained, or

(2) besides the aforementioned size-controlled solid state grains, at least another kind minute grains (e.g. 0.03 to 0.1 µm size) are distributed, or

(3) on a polyester film having very evenly finished surface where existence of grain induced by residue of polymerization catalyst is strictly limited, a thin film principally consisting of cross-linked high molecular resin and having wave-shaped of grain-shaped pattern surface is coated, or

(4) On the polyester film finished very evenly of the surface as aforementioned (1), a thin film of crystalline high polymer substance having wrinkle-shaped protrusions are formed.

The surfaces of the above-mentioned polyester film substrates of (1) through (4) should have surface roughness Rmax of 0.1 µm, preferably 0.05 µm or lower. The surface roughness can be measured by using high accuracy contact tip type roughness meter (talystep-1, Taylor-Hobson Co., Ltd.), and the measured roughness is represented with the value which is level difference from the peak of the protrusion to the bottom of the valley of the surface in a manner as defined by ISO R468-1966 or JIS B0601 Standard.

The protrusions consisting of polyester oligomers can be obtained by such method as that polyester film surface is preliminarily heat-treated to separate the polyester oligomer on the surface and thereafter the ferromagnetic thin film is formed thereon, or that, in a vacuum deposition process to be made in a vacuum chamber, in the initial stage the polyester film surface is strongly heated to separate the oligomer protrusions and thereafter in sequence thereto the vacuum deposition is made to form the ferromagnetic thin film on the oligomer protrusion formed surface.

By observing the surface of the ferromagnetic thin film by means of scanning type electron microscope, the existence of the oligomer-separated protrusions under the ferromagnetic thin film can be easily distinguished from other protrusions. The oligomer protrusions are originally a polygonal shaped crystal formed at the surface of the polyester film, but they are actually distorted by means of heat at the vapor deposition of the ferromagnetic thin film into rather round and moderate protrusion shaped by losing their corner parts. Furthermore, by comparing a surface of a polyester film, on which thin aluminum film or thin gold film is formed under a controlling to suppress the heating of the polyester film surface, with another polyester film surface having oligomer protrusions and further thereon a ferromagnetic thin film, with each other, then the distinguishing of the oligomer protrusions is easily learned. When a differential interference type optical microscope having a magnitude of about 400 is used for observing the above-mentioned oligomer protrusions can be easily observed.

For the area density of the oligomer protrusions on the film surface, $1000/mm^2$ or more, further preferably $2500/mm^2$, is appropriate. And such density of the oligomer protrusions can be obtained by observing them through the differential interference type optical microscope of the magnitude of about 400, and observing at least 10 microscopic fields and counting the number of oligomer protrusions in the fields, followed by subsequent calculation of average value of the density of oligomer protrusions per $1/mm^2$. The oligomer protrusions may be distributed in the microscopic field of the magnitude—400 microscope in a relatively uniform way, but they may be distributed in block style distribution. The block may have several to several tens of oligomer protrusions. Or in chain-like or short-fiber-like block distribution, the chain- or short-fiber-like block may have several to several tens oligomer protrusions. Any way, it is desirable that the oligomer distributions at the polyester film surface should be substantially even at a microscopic view point.

The heights of the oligomer protrusions should be 0.01 to 0.2 µm measured from a center line of surface roughness curve of the ferrogmagnetic thin film (defined by the above-mentioned ISO R468-1966 or JIS B-0601 Standard), and preferably 0.015 to 0.2 μm of the same standard is suitable for this invention. When the heights are under 0.01 μm prevention of squealing in high humidity operation is insufficient. And for the heights of over 0.2 μm, spacing loss between the magnetic head and the magnetic recording medium becomes too large spoiling magnetic characteristics of the recording or reproducing.

Lateral spreads of the oligomer protrusions should be less than 1 μm, and more preferably less than 0.5 μm. For the lateral spreads over 1 μm, the effect of preventing the squealing is not satisfactory.

The surface shape of the ferromagnetic thin film becomes that which is based on the surface shape of the polyester film as such with oligomer protrusions on its surface, and accordingly contact between the ferromagnetic thin film surface and the magnetic recording head is carried out with the ferromagnetic thin film surface above protrusions of the highest heights groups, and in this invention such highest heights protrusions are preferably made by the polyester oligomers. In actual preferred embodiments, at least 2/3 or more, more preferably 9/10 or more, of such highest heights peaks should be preferably based on the polyester oligomers.

Among the four kinds of polyester films (1), (2), (3) and (4), the polyester films of (3) and (4) are provided with an interface thin film between the polyester substrate film and the ferromagnetic thin film, and such type of films are specially suitable for the present invention for the following reason: That is, in each of the two kinds of films, an interface thin film, which is of different substance from that of the polyester substrate, is formed on the principal surface of the polyester film; therefore the polyester oligomers are produced at small pin-hole parts of the interface thin film. The pin-holes are necessarily distributed on the interface thin film since it is very thin. When the interface thin film has even thickness, the small pin-holes distribute very evenly, and therefore the oligomer protrusions are distributed evenly. Since the growth of the oligomer protrusions are controlled by the pin-holes of the interface thin film, the sizes of the oligomer protrusions are evenly controlled by means of the interface thin film. Even when the interface thin film is formed, the oligomer protrusions have their roots in the polyester film. Therefore, the oligomer protrusions are strongly fixed to the polyester substrate film itself. The above-mentioned is proved by the following fact that when a solution containing deposited polyester oligomers is coated on a film other than polyester, for instance, a plastic film substrate of aromatic polyamide film, then after forming the polyester oligomer protrusions on the composite film a ferromagnetic thin film is formed thereon, then in such magnetic recording film the oligomer protrusions are likely to easily drop off.

Since the polyester oligomers have lower softening temperature than that of polyester substrate, the oligomer protrusions are likely to be softened by friction heat when the magnetic recording medium is wrapped by a recording head during the use of the magnetic recording medium. Accordingly, the friction-resistivity of the ferromagnetic thin film at the parts above the oligomer protrusions are weaker than other parts of the magnetic recording medium; and this is supposed the reason that the still life of the magnetic recording medium can not be extended sufficiently. Especially when the ferromagnetic thin film is thinner than 0.04 μm, the still life of the magnetic recording tape becomes extremely short, and therefore the ferromagnetic thin film must be at least 0.04 μm.

In order to further improve the still life of the magnetic recording medium, it is preferable to provide such interface or undercoating thin film having mechanical reinforcing or bonding force increasing effect, such as metal thin film of Ti, Cr or Ni or oxide thin film $Al_2O_3$, $SiO_2$ etc., formed by vacuum deposition process or spattering process on the polyester substrate film having oligomer protrusions thereon prior to forming of the ferromagnetic thin film. The thickness of such mechanically enforcing thin film is preferably 0.02 to 0.1 μm. In view of the bonding strength to the substrate film surface of the above-mentioned reinforcing metal thin film, it is preferable that by adopting an oxygen-dominant atmosphere during the vacuum vapor deposition process or spattering process to form it, some small extent of oxygen is included in the reinforcing metal thin film.

In forming the ferromagnetic thin film, for instance, oblique vapor deposition or vertical vapor deposition of metal thin film of Co, Ni, Fe, etc. or metal thin film containing these metals as host material (for instance, Co—Cr vertical magnetization film) can be used. But in general, in order to improve the bonding strength to the polyester substrate for the above-mentioned reinforcing one magnetic thin film, or further to improve the corrosion-resistivity and abrasion-resistivity of the ferromagnetic thin film as such, it is preferable to use an oxygen-dominant atmosphere during the vapor deposition thereof, thereby to produce ferromagnetic thin film partly containing oxygen in it. Preferable contents of the oxygen in the ferromagnetic thin film or the reinforcing non-magnetic metal thin film should be at least 3% or more, preferably 5% or more.

By containings of oxygen in the above-mentioned ferromagnetic thin film or in the ferromagnetic thin film combined with the undercoating reinforcing metal thin film which also contains oxygen, or by further combination with the oligomer protrusions having roots in the polyester film substrate, the still life of the magnetic recording medium can be drastically improved.

By forming lubricant layer on the surface of the ferromagnetic thin film, improvement of the tape running characteristic is further attainable, and thereby prevention of scaling in hot temperature and high moisture becomes further perfect. The lubricant layer can be formed by depositing the below mentioned organic or inorganic lubricant as such simply on the ferromagnetic thin film surface, or can be applied in a form of thin resin coating formed by applying a solution containing the lubricant substance and plastic resin. Thereby, the lubrication characteristic of the ferromagnetic thin film is further improved.

For organic lubricant, fatty acid, fatty acid esters, fatty acid amides, metallic soaps, aliphatic alcohols, paraffins, silicones, fluorine-surfactants, or the like are usable.

As the fatty acid, those having 12 carbons or more, such as lauric acid, myristic acid, palmitic acid, stearic acid, behenic acid, oleic acid, linolic acid, linolenic acid, etc., can be used.

As the fatty acid esters, stearic acid ethyl, stearic acid butyl, stearic acid amyl, stearic acid monoglyceride, palmitic acid monoglyceride, oleic acid monoglyceride, pentarythritol-tetrastearate, etc., can be used.

As the fatty acid amide, caproic acid amide, capric acid amide, lauric acid amide, palmitic acid amide, stearic acid amide, behenic acid amide, oleic acid amide, linolic acid amide, methylene bis-stearic acid amide and ethylene bis-stearic acid amide, etc., can be used.

As the metal soap, salts of lauric acid, myristic acid, palmitic acid, stearic acid, behenic acid, oleic acid, linolic acid, linolenic acid and zinc, lead, nickel, cobalt, iron, aluminum, magnesium, strontium, copper, etc., and salts of alkyl sulfonate derived from acids of lauryl, palmitil myristil, stearyl-behenyl, oleyl, linol, linolen, etc., and the above-mentioned metals can be used.

As the aliphatic alcohols, cetyl alcohol and stearil alcohols can be used.

As the paraffin, such saturated hydrocarbons as n-octadecane, n-nonadecane, n-tridecane, n-docosane, n-dotriacontañe, etc., can be used.

As the silicone, polysiroxane having its hydrogens partly substituted by alkyl group or phenyl group, and those further denatured by fatty acid, aliphatic alcohols, acid amide or the like can be used.

As the fluorine surfactant, salts of perfluoroalkyl carboxylic acid or perfluoroalkyl sulfonic acid and sodium, potassium, magnesium, zinc, aluminium, iron, cobalt or nickel, and perfluoroalkyl phosphate ester, perfluoroalkyl betaine, perfluoroalkyltrimethyl ammonuim salt, perfluoroethylene oxide, perfluoroalkyl fatty acid ester, etc., can be used.

As inorganic lubricant, graphite powder, molybdenum, disulfide powder, wolfram disulfide powder, molybdenum selenide powder, wolfram selenide powder, calcium fluoride powder or the like can be used.

The lubricant layer is formed by applying the above-mentioned lubricant as such or solving the lubricant and a synthetic resin into a solution and formed, or by depositing from vapor of the lubricant substance on the ferromagnetic thin film surface. In case of the above-mentioned application of the solution, polyester resin, epoxy resin, urethane resin, etc. as binder and anti-static agent, antirust agent, or the like additives can be added. In any case, the amount of the lubricant layer to be coated on the ferromagnetic thin film should be at a rate of 0.5—500 mg/m$^2$, preferably 5—200 mg/m$^2$. The lubricant need not cover the whole surface of the magnetic recording medium, but may be formed partly, for instance, check pattern shaped or oblique stripe-shaped or dot-shaped pattern. An actual example of the present invention is elucidated in the following:

Example 1

As a polyester substrate film, a polyethyleneterephthalate substantially having no fine grains based on polymerization catalyst residue on the surfaces, hence having an even-finished surface, is used. Then, on one surface of the substrate, an interface thin film having very fine wave formed uneveriness and made of a high polymer plastic of a kind different from the polyester film is formed. The interface film is formed by coating a solution of denatured silicone emulsion solution containing a viscosity-increasing agent during a stretching process of the polyester film, followed by hardening its surface, thereby to make very fine waveformed unevenness of about 0.015 µm surface roughness. As other sample, the other surface of the polyester substrate, which is the even-finished surface of the polyester film, is used without forming the interface thin film. And several samples of these two kinds film surfaces are prepared. Then hot air streams are blown continuously onto the surfaces of the these two kinds of samples with various temperatures of between 170°C—180°C for a various time. Then polyester oligomer minute crystals are separated on the even-finished principal surface sample and, in case of the interface thin film coated samples through the weak point or cracks of the interface thin film. And thereafter, on the surfaces of these samples. Co and Ni are vacuum-deposited by continuous oblique vacuum-deposition to form ferromagnetic thin films containing 20 wt% of Ni and having thickness of 0.1 µm, under the atmosphere containing a small amount of oxygen, thereby forming the ferromagnetic thin film containing 5% oxygen against the number of atom of metal. On the other hand, such comparison samples are made as a polyester film having no oligomer protrusions deposited thereon and another sample where by stopping oxygen gas during the vacuum deposition process thereby making contents of oxygen to be under 1% against the metal. Still another polyester film having interface layer of TiO$_2$ spattered film with 0.03 µm thickness under the ferromagnetic thin film is prepared. These samples are cut into a predetermined width to make sample tapes and squealing characteristics and still lives as video recorder tape are examined with ordinary home use video tape-recorder under a condition of 30°C, 80% RH, and as well as 30°C, 90% RH. The results of the examination are shown in the following Table 1 wherein the samples No. 1, No. 5 and No. 9 are data of the comparison samples.

TABLE 1

| Sample No. | Condition of the polyester film surface under the ferromagnetic thin film | Oligomer protrusions | | | Oxygen contents in ferromagnetic thin layer (atom%) | TiO$_2$ Interface layer | Squealing | | Still life (minutes) | |
|---|---|---|---|---|---|---|---|---|---|---|
| | | Density (Oligomer protrusion/mm²) | Height (µm) | Diameter (µm) | | | 30°C 80% | 30°C 90% | 30°C 80% | 30°C 90% |
| *1 | Even surface | 100 | 0.01 | 0.05 | 1 or less | nil | harsh | — | 15 | — |
| 2 | " | 1,000 | 0.05 | 0.4 | 5 | " | silent | fairly silent | 30 | 10 |
| 3 | " | 2,500 | 0.04 | 0.3 | 5 | formed | " | silent | 60 | 20 |
| 4 | " | 1,500 | 0.05 | 0.5 | 1 or less | nil | " | fairly silent | 20 | 5 |
| *5 | | 2,000 | 0.007 | 0.03 | 5 | " | harsh | — | 30 | — |
| 6 | " | 3,000 | 0.02 | 0.08 | 5 | " | silent | fairly silent | 60 | 20 |
| 7 | " | 4,000 | 0.03 | 0.1 | 5 | " | extremely silent | silent | 80 | 40 |
| 8 | " | 7,000 | 0.04 | 0.2 | 5 | formed | " | " | 80 | 50 |
| *9 | Even surface | 300 | 0.008 | 0.1 | 5 | " | harsh | — | 20 | — |
| 10 | " | 1,500 | 0.1 | 1.2 | 5 | nil | fairly harsh | harsh | 20 | 5 |
| *11 | " | 700 | 0.015 | 0.1 | 5 | nil | fairly harsh | fairly harsh | 15 | 5 |

(*—marked are comparison samples which are outside of the present invention)

## Example 2

On the surface of the ferromagnetic thin films of the samples No. 3, No. 4, No. 7 and No. 8 of the preceding Example 1, an acetone solution of stearic acid (500 ppm concentration) is coated with wet-thickness of about 5 µm and dried, to form a lubricant layers. In all the samples thus prepared, squealing under the condition of 30°C and 90% RH are almost prevented and tape runs with satisfactory conditions.

## Example 3

On one surface of polyethyleneterephthalate films in which fine grains based on polymerization catalyst residue is extremely reduced similarly as the samples of the foregoing Example 1, ferromagnetic thin films of different film thicknesses of 0.02 µm, 0.04 µm, 0.08 µm and 0.12 µm are respectively formed as different samples with Co-Ni as ferromagnetic substance, and relation between still lives and ferromagnetic thin film thicknesses are examined and the results are shown in the attached figure. In all the above-mentioned samples, states of the oligomer protrusions formation are similar each other and density is about 2500/mm², heights are about 0.05 µm and diameters are about 0.3 µm.

As apparent from the above-mentioned examples magnetic recording medium in accordance with the present invention has very much improved running characteristic and still life, and its utility is very great.

## Claims

1. A magnetic recording medium comprising:
a polyester substrate having oligomer protrusions at least on its principal face at a density of 1000/mm² or higher, said protrusions having heights of between 0.01 and 0.2 µm and diameters of between 0.08 and 1.2 µm, the lateral spread of said protrusions being less than 1 µm, and
a ferromagnetic thin film having a thickness of 0.04 µm or larger formed on said principal face.

2. A magnetic recording medium in accordance with Claim 1 comprising:
a polyester substrate having oligomer protrusions at least on its principal face at a density of 2500/mm² or higher, and
a ferromagnetic thin film having a thickness of 0.04 µm or larger formed on said principal face.

3. A magnetic recording medium in accordance with Claim 1 or 2, wherein the diameters of said oligomer protrusions are 1.0 µm or smaller.

4. A magnetic recording medium in accordance with Claim 1 or Claim 2, wherein said oligomer protrusions are directly derived from said polyester substrate.

5. A magnetic recording medium in accordance with Claim 1 or 2, wherein said ferromagnetic thin film comprises oxygen containing ferromagnetic metal.

6. A magnetic recording medium in accordance with Claim 1 or 2 which further comprises an interface thin film between said polyester substrate and ferromagnetic thin film.

7. A magnetic recording medium in accordance with Claim 6, wherein said interface thin film is of a substance selected from the group consisting of Ti, Cr, Ni, $Al_2O_3$ and $SiO_2$.

8. A magnetic recording medium in accordance with Claim 6, wherein said interface thin layer is of a different plastic from that of said polyester substrate and has a given evenly distributed microscopic pattern, weaker points of said pattern defining distribution of said oligomer protrusions by allowing their penetration through said interface thin layer.

9. A magnetic recording medium in accordance with Claim 1 or 2 which further comprises a lubrication layer on the surface of said ferromagnetic thin film.

10. A magnetic recording medium in accordance with Claim 6, wherein said interface thin layer has cracks of wave or grain shape pattern, thereby having said weaker points in relation to said cracks.

11. A magnetic recording medium in accordance with Claim 6, wherein said interface thin film layer has a wrinkled surface.

12. Method of making a magnetic recording medium comprising the steps of:
preparing a polyester substrate having an even principal surface carrying out a heat treatment at least on said principal face thereby forming oligomer protrusions on said principal face at a density of 1000/mm² or more said protrusions having heights of between 0.01 and 0.2 µm and diameters of between 0.08 and 1.2 µm, the lateral spread of said protrusions being less than 1 µm, and forming a ferromagnetic thin film on said principal surface having said oligomer protrusions.

13. Method for making a magnetic recording medium in accordance with Claim 12, wherein said heat treatment is carried out separately from and preceding said forming of the ferromagnetic thin film.

14. Method for making a magnetic recording medium in accordance with Claim 12, wherein said heat treatment is carried out during said forming of the ferromagnetic thin film.

15. Method for making a magnetic recording medium in accordance with Claim 12, which further comprises the step of forming an interface thin film on said polyester substrate, prior to said forming of said ferromagnetic thin film.

16. Method for making a magnetic recording medium in accordance with Claim 15, wherein said interface thin film is a non magnetic metal film.

17. Method for making a magnetic recording medium in accordance with Claim 15, wherein said interface thin film is of a substance selected from the group consisting of Ti, Cr, Ni, $Al_2O_3$ and $SiO_2$.

18. Method for making a magnetic recording medium in accordance with Claim 15, wherein said interface thin layer is of a different plastic from that of said polyester substrate and has a given evenly distributed microscopic pattern, weaker points of said pattern defining distribution of said oligomer protrusions by allowing their penetraion through said interface thin layer.

**Patentansprüche**

1. Ein magnetisches Aufzeichnungsmedium umfassend:

ein Polyestersubstrat mit oligomeren Aubuchtungen auf mindestens seiner Hauptoberfläche in einer Dichte von 1000 pro $mm^2$ oder mehr, wobei diese Ausbuchtungen eine Höhe 0,01 bis 0,2 µm und einen Durchmesser von zwischen 0,08 und 1,2 µm aufweisen und die seitliche Ausdehnung dieser Ausbuchtungen weniger als 1 µm beträgt und

einen ferromagnetischen dünnen Film mit einer Dicke von 0,04 µm oder mehr, der auf der genannten Hauptoberfläche gebildet worden ist.

2. Ein magnetisches Aufzeichnungsmedium nach Anspruch 1 umfassend:

ein Polyestersubstrat mit oligomeren Ausbuchtungen auf mindestens seiner Hauptoberfläche in einer Dichte von 2500 pro $mm^2$ oder mehr und

einen ferromagnetischen dünnen Film mit einer Dicke von 0,04 µm oder mehr, welcher auf der genannten Hauptoberfläche ausgebildet worden ist.

3. Ein magnetisches Aufzeichnungsmedium nach Anspruch 1 oder 2, bei welchem die Durchmesser der genannten oligomeren Ausbuchtungen 1,0 µm oder weniger betragen.

4. Ein magnetisches Aufzeichnungsmedium nach Anspruch 1 oder 2, bei welchem die genannten oligomeren Ausbuchtungen direkt aus dem Polyestersubstrat entstanden sind.

5. Ein magnetisches Aufzeichnungsmedium nach Anspruch 1 oder 2, bei welchem der genannte ferromagnetische Film sauerstoffhaltiges ferromagnetisches Metall umfaßt.

6. Ein magnetisches Aufzeichnungsmedium nach Anspruch 1 oder 2, welches außerdem einen zwischen dem genannten Polyestersubstrat und dem ferromagnetischen dünnen Film befindlichen dünnen Grenzfilm aufweist.

7. Ein magnetisches Aufzeichnungsmedium nach Anspruch 6, bei welchem der genannten dünnen Grenzfilm aus einem Material, ausgewählt aus der Gruppe bestehend aus Ti, Cr, Ni, $Al_2O_3$ und $SiO_2$, besteht.

8. Ein magnetisches Aufzeichnungsmedium nach Anspruch 6, bei welchem der genannte dünne Grenzfilm aus einem anderen Kunststoff besteht als das Polyestersubstrat und ein gleichförmig verteiltes mikroskopisches Muster aufweist, wobei die schwächeren Punkte dieses Musters die Verteilung der genannten oligomeren Ausbuchtungen dadurch bestimmen, daß sie diese durch die genannte dünne Grenzschicht hindurchtreten lassen.

9. Ein magnetisches Aufzeichnungsmedium nach Anspruch 1 oder 2, welches weiterhin eine Gleitschicht auf der Oberfläche des genannten ferromagnetischen dünnen Filmes aufweist.

10. Ein magnetisches Aufzeichungsmedium nach Anspruch 6, bei welchem die genannte dünne Grenzschicht Risse aufweist, welche ein wellenförmiges oder gekörntes Muster bilden, wobei die schwächeren Punkte zu diesen Rissen in Beziehung stehen.

11. Ein magnetisches Aufzeichnungsmedium nach Anspruch 6, bei welchem die genannte dünne Grenzschicht eine gekräuselte Oberfläche aufweist.

12. Verfahren zur Herstellung eines magnetischen Aufzeichnungsmediums umfassend die folgenden Schritte:

Herstellung eines Polyestersubstrates mit einer glatten Hauptoberfläche,

Durchführen einer Hitzebehandlung auf mindestens dieser Hauptoberfläche, wodurch oligomere Ausbuchtungen auf dieser Hauptoberfläche in einer Anzahl von 1000 pro $mm^2$ oder mehr gebildet werden, und

Bilden eines ferromagnetischen dünnen Filmes auf der genannten Hauptoberfläche mit den genannten oligomeren Ausbuchtungen.

13. Verfahren zur Herstellung eines magnetischen Aufzeichungsmediums nach Anspruch 12, bei welchem die genannte Hitzebehandlung separat und vor der Bildung des ferromagnetischen dünnen Filmes durchgeführt wird.

14. Verfahren zur Herstellung eines magnetischen Aufzeichnungsmedium nach Anspruch 12, bei welchem die genannte Hitzebehandlung zugleich während der Bildung des ferromagnetischen dünnen Filmes durchgeführt wird.

15. Verfahren zur Herstellung eines magnetischen Aufzeichnungsmediums nach Anspruch 12, welches weiterhin die Maßnahme der Bildung eines dünnen Grenzfilmes auf dem genannten Polyestersubstrat vor der Bildung des genannten ferromagnetischen dünnen Filmes umfaßt.

16. Verfahren zur Herstellung eines magnetischen Aufzeichnungsmediums nach Anspruch 15, bei welchem der genannte dünne Grenzfilm aus einem nicht-magnetischen Metall besteht.

17. Verfahren zur Herstellung eines magnetischen Aufzeichnungsmediums nach Anspruch 15, bei welchem der genannte dünne Grenzfilm aus einem Material, ausgewählt aus der Gruppe bestehend aus Ti, Cr, Ni, $Al_2O_3$ und $SiO_2$ besteht.

18. Verfahren zur Herstellung eines magnetischen Aufzeichnungsmedium nach Anspruch 15, bei welchem die genannte dünne Grenzschicht aus einem anderen Kunststoff besteht als das genannte Polyestersubstrat und ein gleichmäßig aufgeteiltes mikroskopisches Muster aufweist, wobei die schwächeren Punkte dieses Musters die Verteilung der genannten oligomeren Ausbuchtungen dadurch bestimmen, daß sie diese durch die genannte dünne Grenzschicht hindurchtreten lassen.

## Revendications

1. Support d'enregistrement magnétique comprenant:

—un substrat en polyester ayant des saillies en oligomère au moins sur sa face principale à une densité de 1000/mm² ou plus, les saillies ayant des hauteurs comprises entre 0,01 et 0,2 µm et des diamètres compris entre 0,08 et 1,2 µm, l'étendue latérale des saillies étant inférieure à 1 µm, et

—une fine pellicule ferromagnétique ayant une épaisseur de 0,04 µm ou plus formée sur la face principale.

2. Support d'enregistrement magnétique selon la revendication 1, comprenant:

—un substrat en polyester comportant des saillies en oligomère au moins sur sa face principale à une densité de 2500/mm² ou plus; et

—une fine pellicule ferromagnétique ayant une épaisseur de 0,04 µm ou plus formée sur la face principale.

3. Support d'enregistrement magnétique selon la revendication 1 ou la revendication 2, dans lequel le diamètre des saillies en oligomère est 1,0 µm ou moins.

4. Support d'enregistrement magnétique selon la revendication 1 ou la revendication 2, dans lequel les saillies en oligomère proviennent directement du substrat en polyester.

5. Support d'enregistrement magnétique selon la revendication 1 ou la revendication 2, dans lequel la fine pellicule ferromagnétique comprend un métal ferromagnétique contenant de l'oxygène.

6. Support d'enregistrement magnétique selon la revendication 1 ou la revendication 3, qui comprend en outre une fine pellicule d'interface entre le substrat en polyester et la fine pellicule ferromagnétique.

7. Support d'enregistrement magnétique selon la revendication 6, dans lequel la fine pellicule d'interface est constituée d'une substance choisie dans le groupe comprenant Ti, Cr, Ni, $Al_2O_3$ et $SiO_2$.

8. Support d'enregistrement magnétique selon la revendication 6, dans lequel la fine couche d'interface est constituée d'un matériau plastique différent de celui du substrat en polyester et a un motif microscopique régulièrement réparti; les points faibles du motif définissant la répartition des saillies en oligomère en permettant leur pénération à travers la fine couche d'interface.

9. Support d'enregistrement magnétique selon la revendication 1 ou la revendication 2, qui comprend en outre une couche de lubrification sur la surface de la fine pellicule ferromagnétique.

10. Support d'enregistrement magnétique selon la revendication 6, dans lequel la fine couche d'interface a des crevasses de forme ondulée ou de grains, d'où il résulte que les points faibles sont en rapport avec les crevasses.

11. Support d'enregistrement magnétique selon la revendication 6, dans lequel la fine couche de la pellicule d'interface comporte une surface ridée.

12. Procédé de fabrication d'un support d'enregistrement magnétique, comprenant les étapes consistant à:

—préparer un substrat en polyester ayant une surface principale régulière,

—exécuter un traitement thermique sur au moins la face principale, d'où la formation de saillies en oligomère sur la face principale à un taux de 1000/mm² ou plus; et

—former une fine pellicule ferromagnétique sur la surface principale ayant des saillies en oligomère.

13. Procédé de fabrication d'un support d'enregistrement magnétique selon la revendication 12, dans lequel:

—le traitement thermique est exécuté séparément et avant la formation de la fine pellicule ferromagnétique.

14. Procédé de fabrication d'un support d'enregistrement magnétique selon la revendication 12, dans lequel:

—le traitement thermique est exécuté fortuitement lors de la formation de la fine pellicule ferromagnétique.

15. Procédé de fabrication d'un support d'enregistrement magnétique selon la revendication 12, qui comprend en outre l'étape consistant à:

—former une fine pellicule d'interface sur le substrat en polyester, avant la réalisation de la fine pellicule ferromagnétique.

16. Procédé de fabrication d'un support d'enregistrement magnétique selon la revendication 15, dans lequel la fine pellicule d'interface est une pellicule de métal amagnétique.

17. Procédé de fabrication d'un support d'enregistrement magnétique selon la revendication 15, dans lequel la fine pellicule d'interface est une substance choisie dans le groupe constitué de Ti, Cr, Ni, $Al_2O_3$ et $SiO_2$.

18. Procédé de fabrication d'un support d'enregistrement magnétique selon la revendication 15, dans lequel la fine couche d'interface est constituée d'un matériau plastique différant de celui du substrat en polyester et présente un motif microscopique donné régulièrement réparti, les points faibles du motif définissant la répartition des saillies en oligomère en permettant leur pénétration dans la fine couche d'interface.